# EUROPEAN PATENT APPLICATION

(11) **EP 4 509 723 A1**
(43) Date of publication of application: **19.02.2025**
(21) Application number: 23787646.1
(22) Date of filing: 10.04.2023
(51) Int. Cl.: F04D 29/70, F04D 29/60

(54) **MOUNTING DEVICE FOR FILTER ELEMENT, AND AIR BLOWER**

(30) Priority: 11.04.2022 CN 202220827901 U
(71) Applicant: Atlas Copco (Wuxi) Compressor Co., Ltd., Wuxi, Jiangsu 214028 (CN)
(72) Inventor: HU, Yuanjia, Wuxi, Jiangsu 214028 (CN)
(74) Representative: Van Minnebruggen, Ewan Benito Agnes
(86) International application number: PCT/CN2023/087365
(87) International publication number: WO 2023/198002

(57) **Abstract**

Provided are a mounting device for a filter element and an air blower. The mounting device includes a fixed seat, a mounting seat, and a plurality of quick-assembling assemblies. The mounting seat includes a mounting portion, and a plurality of support portions spaced apart from each other in a circumferential direction of the mounting portion and connected to the mounting portion. A mounting space is defined by the mounting portion and the plurality of support portions, and the filter element is mountable within the mounting space. The plurality of quick-assembling assemblies is in one-to-one correspondence to the plurality of support portions. Each of the plurality of the quick-assembling assemblies has one end connected to the corresponding support portion and another end connected to the fixed seat. **In** the present disclosure, the filter element is quickly fastened onto the fixed seat by means of the quick-assembling assemblies, which facilitates mounting and dismounting of the filter element.

## Description

### FIELD

The present disclosure relates to the field of parts and components technologies of air blowers, and in particular, to a mounting device for a filter element and an air blower.

### BACKGROUND

A head of an air blower has a large demand for air inflow, and accordingly a corresponding air filter element usually has a larger size than that of a filter element. Therefore, in a workshop production-line assembly stage and a customer on-site maintenance and replacement stage, mounting of the filter element is relatively time-consuming. Meanwhile, the air blower has a complicated inner structure, so that a common bolted connection is often difficult to ensure one-time successful mounting during mounting and replacement of the filter element.

### SUMMARY

The present disclosure aims to at least solve one of the technical problems in the related art. To this end, the present disclosure provides a mounting device for a filter element, which is easy to mount and dismount.

The present disclosure further provides an air blower using the above mounting device, which allows easy mounting and dismounting.

According to embodiments of the present disclosure, the mounting device for the filter element includes a fixed seat, a mounting seat, and a plurality of quick-assembling assemblies. The mounting seat includes a mounting portion, and a plurality of support portions spaced apart from each other in a circumferential direction of the mounting portion and connected to the mounting portion. A mounting space is defined by the mounting portion and the plurality of support portions, and the filter element is mountable within the mounting space. The plurality of quick-assembling assemblies is in one-to-one correspondence to the plurality of support portions. Each of the plurality of the quick-assembling assemblies has one end connected to a corresponding support portion of the plurality of support portions and another end connected to the fixed seat.

With the mounting device for the filter element according to the embodiments of the present disclosure, the filter element can be quickly fastened onto the fixed seat by means of the quick-assembling assemblies, which facilitates mounting and dismounting of the filter element.

In some embodiments of the present disclosure, each of the plurality of quick-assembling assemblies includes a first connection member and a second connection member. The first connection member is disposed on the fixed seat. The second connection member is disposed on the corresponding support portion. The second connection member is engageable with or disengageable from the first connection member.

In some embodiments of the present disclosure, one of the first connection member and the second connection member is a hook, and the other one of the first connection member and the second connection member is a snap.

In some embodiments of the present disclosure, the fixed seat includes a body, and a plurality of brackets. The plurality of brackets is disposed on the body, and is in one-to-one correspondence to the plurality of support portions. Each of the plurality of brackets is provided with the first connection member.

In some embodiments of the present disclosure, each of the plurality of brackets is detachably disposed on the body.

In some embodiments of the present disclosure, each of the plurality of support portions includes a first portion and a second portion. The first portion is connected to the mounting portion. The first portion and the mounting portion abut against an axial end portion of the filter element away from the fixed seat. The second portion is vertically connected to the first portion and abuts against a circumferential side surface of the filter element. The second connection member is arranged on the second portion.

In some embodiments of the present disclosure, the second portion extends in a lengthwise direction perpendicular to the mounting portion and the body.

In some embodiments of the present disclosure, the mounting seat further includes a fastener disposed on the mounting portion and configured to be connected to the filter element.

In some embodiments of the present disclosure, the plurality of support portions includes at least three support portions.

According to embodiments of the present disclosure, the air blower includes the mounting device for the filter element as described above.

With the air blower according to the embodiments of the present disclosure, the filter element is quickly fastened onto the fixed seat by means of the quick-assembling assemblies, which facilitates the mounting and dismounting of the filter element.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the description of embodiments taken in conjunction with the accompanying drawings, in which:
FIG. 1 is an exploded view of a mounting device for a filter element according to an embodiment of the present disclosure;
FIG. 2 is a schematic view of an engagement between a first connection member and a second connection member according to an embodiment of the present disclosure;
FIG. 3 is a partially enlarged view at part I illustrated in FIG. 2.

### Reference Numerals:

100, mounting device for filter element;
10, fixed seat; 11, body; 12, bracket;
20, mounting seat; 21, mounting portion; 22, support portion; 221, first portion; 222, second portion; 23, mounting space; 24, fastener;
30, quick-assembling assembly; 31, first connection member; 32, second connection member;
200, filter element.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

**In** the description of the present disclosure, it is to be understood that, terms such as "center", "longitudinal", "lateral", "length", "width", "thickness", "over", "below", "front", "back", "left", "right", "vertical", "horizontal", "top", "bottom", "inner", "outer", "clockwise", "counterclockwise", "axial", "radial", "circumferential", etc., are based on the orientation or position relationship shown in the drawings, and is merely for the convenience of describing the present disclosure and simplifying the description, rather than indicating or implying that the associated device or element must have a specific orientation, or be constructed and operated in a specific orientation, and therefore cannot be understood as a limitation of the present disclosure.

**In** addition, the features associated with "first" and "second" may explicitly or implicitly include at least one of the features, and are used to distinguish between descriptive features without any order or priority.

**In** the description of the present disclosure, "plurality" means at least two, unless otherwise specified.

**In** the present disclosure, it should be noted that, unless otherwise clearly specified and defined, terms such as "installed", "connected", "coupled", and the like should be understood in a broad sense. For example, it may be a fixed connection or a detachable connection or an integral connection; mechanical connection or electrical connection or communication; direct connection or indirect connection through an intermediate; internal communication of two components. For those of ordinary skill in the art, the specific meaning of the above-mentioned terms in the present disclosure can be understood according to specific circumstances.

A mounting device 100 for a filter element 200 according to the embodiments of the present disclosure will be described below with reference to the accompanying drawings.

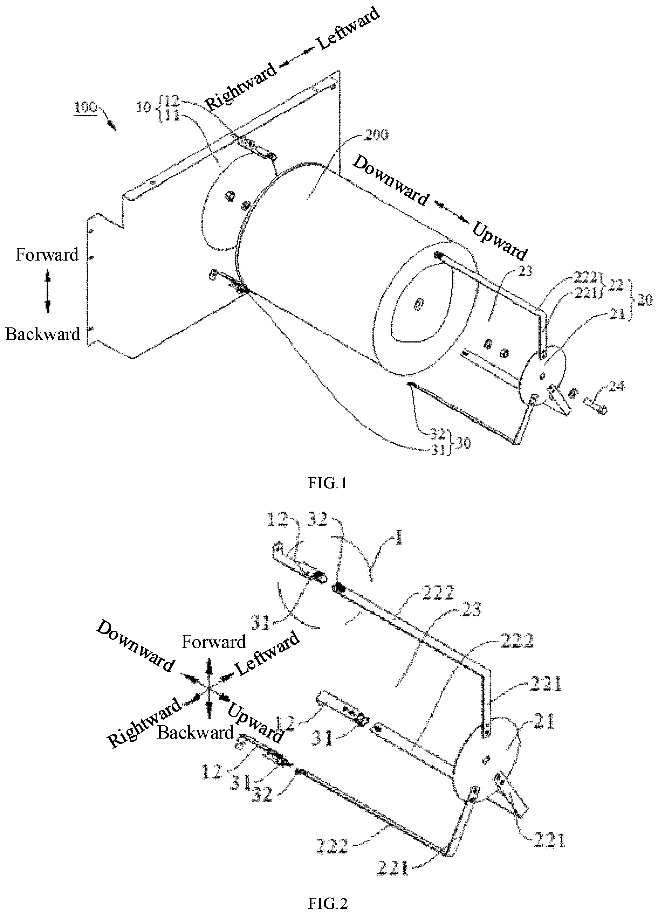

As illustrated in FIG. 1, according to the embodiments of the present disclosure, the mounting device 100 for the filter element 200 includes a fixed seat 10, a mounting seat 20, and a plurality of quick-assembling assemblies 30.

The mounting seat 20 includes a mounting portion 21, and a plurality of support portions 22 spaced apart from each other in a circumferential direction of the mounting portion 22 and connected to the mounting portion 21. A mounting space 23 is defined by the mounting portion 21 and the plurality of support portions 22, and the mounting space 23 is used to mount the filter element 200. The filter element 200 is configured to filter air entering the filter element 200 to obtain clean air. The mounting space 23 is configured to limit the filter element 200 to be kept stationary relative to the mounting seat 20 without moving. For example, provided are two support portions 22 that are each configured as a plate-shaped structure with an arc-shaped cross section, and the filter element 200 is generally cylindrical. Therefore, the arc-shaped support portions 22 are attached on a circumferential side surface of the cylindrical filter element 200 to improve stability of the filter element 200; or, provided are three support portions 22 that are each configured as a plate-shaped structure with a beeline-shaped or arc-shaped cross section, and the three support portions 22 can limit the filter element 200 to be kept stationary without moving. In addition, more support portions 22, for example, four, five support portions, or the like may be provided, and details thereof will be omitted herein.

The plurality of quick-assembling assemblies 30 is in one-to-one correspondence to the plurality of support portions 22. Each of the plurality of the quick-assembling assemblies 30 has one end connected to the corresponding support portion 22 and another end connected to the fixed seat10. The mounting seat 20 can be quickly fastened onto the fixed seat 10 by means of the quick-assembling assemblies 30 to achieve quick mounting and replacement of the filter element 200. Compared with a bolted connection in the related art, in the present disclosure, it is possible to position the fixed seat 10 relative to the mounting seat 20 in a dark environment, and thus a positioning success rate can be improved.

With the mounting device 100 for the filter element 200 according to the embodiments of the present disclosure, the filter element 200 can be quickly fastened onto the fixed seat 10 by means of the quick-assembling assemblies 30, which facilitates mounting and dismounting of the filter element 200.

As illustrated in FIG. 1 and FIG. 2, in some embodiments, each of the plurality of quick-assembling assemblies 30 includes a first connection member 31 and a second connection member 32. The first connection member 31 is disposed on the fixed seat 10. The second connection member 32 is disposed on the corresponding support portion 22, and is engageable with or disengageable from the first connection member 31. Quick dismounting and mounting of the quick-assembling assemblies 30 can be realized by means of the first connection member 31 and the second connection member 32. Thus, it is possible to improve efficiency and convenience. For example, the first connection member 31 is a screw hole, and the second connection member 32 is a rotatable screw. The screw is disposed on the support portion 22 and screwed into the screw hole to position and assemble the fixed seat 10 and the mounting seat 20. In addition, the first connection member 31 and the second connection member 32 may also be others such as a snap, a hook, or the like.

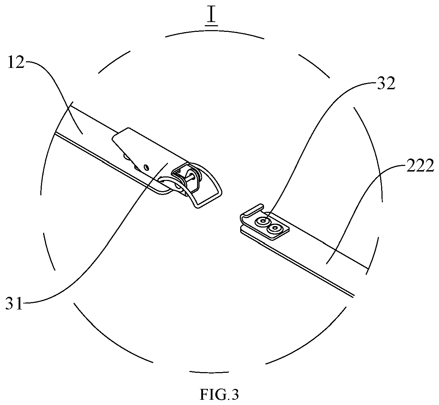

As illustrated in FIG. 3, further, one of the first connection member 31 and the second connection member 32 is a hook, and the other one of the first connection member 31 and the second connection member 32 is a snap. With this arrangement, efficiency and convenience of assembling can be further improved. For example, the first connection member 31 is the hook, and the second connection member 32 is the snap; or the first connection member 31 is the snap, and the second connection member 32 is the hook.

As illustrated in FIG. 1 and FIG. 2, in some embodiments, each of the plurality of support portions 22 includes a first portion 221 and a second portion 222.

The first portion 221 is connected to the mounting portion 21. The first portion 221 and the mounting portion 21 abut against an axial end portion of the filter element 200 away from the fixed seat 10. The second portion 222 is vertically connected to the first portion 221 and abuts against a circumferential side surface of the filter element 200. The second connection member 32 is disposed on the second portion 222. With the arrangement in which the first portion 221 and the mounting portion 21 abut against the axial end portion of the filter element 200 and the second portion 222 abuts against the circumferential side surface of the filter element 200, the mounting space 23 can be brought into contact with the filter element 200 in several directions, thereby improving the stability of the filter element 200.

As illustrated in FIG. 1, in some embodiments, an axial end portion of the filter element 200 close to the fixed seat 10 abuts against the fixed seat 10. In a case where the first portion 221 and the mounting portion 21 abut against the axial end portion of the filter element 200 away from the fixed seat 10, the filter element 200 is subject to stable stress on both opposite ends thereof, which further improves the stability.

As illustrated in FIG. 1, further, the mounting seat 20 further includes a fastener 24 disposed on the mounting portion 21 and configured to be connected on the filter element 200. Since the filter element 200 is fastened onto the mounting portion 21 by means of the fastener 24, the stability of the filter element 200 can be further improved, thereby avoiding the movement of the filter element 200. For example, the fastener 24 is a screw, corresponding holes are formed on the mounting portion 21 and the filter element 200, and the mounting portion 21 and the filter element 200 can be fastened together by screwing the screw into the holes; or, the fastener 24 is a bolt, the corresponding holes are formed on the mounting portion 21 and the filter element 200, and the mounting portion 21 and the filter element 200 can be fastened together by screwing the bolt into the holes to be engaged with the holes.

As illustrated in FIG. 1, further, the fixed seat 10 includes a body 11 and a plurality of brackets 12.

The plurality of brackets 12 is disposed on the body 11, and is in one-to-one correspondence to a plurality of second portions 222. Each of the plurality of brackets 12 is provided with the first connection member 31. The bracket 12 can provide a mounting position for the first connection member 31. Meanwhile, it is convenient to observe a mounting position of the filter element 200 to realize quick positioning.

As illustrated in FIG. 1 and FIG. 2, in some embodiments, the second portion 222 extends in a lengthwise direction perpendicular to the mounting portion 21 and the body 11.

In some embodiments, each of the plurality of brackets 12 extends in the lengthwise direction and abuts against the circumferential side surface of the filter element 200. Since the bracket 12 abuts against the circumferential side surface of the filter element 200, support for the filter element 200 is further increased, thereby improving the stability of the filter element 200.

In some embodiments, each of the plurality of brackets 12 is detachably disposed on the body 11. Since the bracket 12 is detachably disposed on the body 11, it is convenient to maintain and replace the first connection member 31 later.

In some embodiments, a through hole is formed on the bracket 12, a corresponding through hole is formed on the body 11, and the bracket 12 is fastened onto the body 11 by engaging a bolt with a nut. In some embodiments, the bracket 12 may also be fastened by a screw or the like, and details thereof will be omitted herein.

In some other embodiments, the through hole is formed on the bracket 12, the corresponding through hole is formed on the body 11, and the bracket 12 is fixed onto the body 11 by means of a rivet.

In some embodiments, there are at least three support portions 22. For example, three support portions 22 are provided. The three support portions 22 are circumferentially distributed on the mounting portion 21 and abut against the circumferential side surface of the filter element 200. Therefore, it is possible to satisfy the concept of triangular stability design while reducing structural complexity of the support portion 22. Thus, machining difficulty can be reduced while ensuring supporting stability.

With reference to FIG. 1 to FIG. 3, an embodiment of a mounting device 100 for a filter element 200 according to the present disclosure will be described below.

The mounting device 100 for the filter element 200 includes a fixed seat 10, a mounting seat 20, and a quick-assembling assembly 30. The filter element 200 is cylindrical.

The fixed seat 10 includes a body 11 and a bracket 12. Three brackets are detachably arranged on the body 11.

The mounting seat 20 includes a mounting portion 21, a support portion 22, and a fastener 24. The mounting portion 21 abuts against an axial end portion of the filter element 200 away from the fixed seat 10. The fastener 24 is disposed on the mounting portion 21 and configured to be connected to the filter element 200. Three support portions 22 are provided. The three support portions 22 are spaced apart from each other in a circumferential direction of the mounting portion 21 and connected to the mounting portion 21. A mounting space 23 is defined by the mounting portion 21 and three support portions 22, and the filter element 200 is mountable within the mounting space 23. Each of the plurality of support portions 22 includes a first portion 221 and a second portion 222. The first portion 221 is connected to the mounting portion 21. The first portion 221 and the mounting portion 21 abut against the axial end portion of the filter element 200 away from the fixed seat 10. The second portion 222 is vertically connected to the first portion 221 and abuts against a circumferential side surface of the filter element 200. A second connection member 32 is disposed on the second portion 222. Three second portions 222 are in one-to-one correspondence to three brackets 12. The second portion 222 extends in a lengthwise direction perpendicular to the mounting portion 21 and the body 11. Each of the plurality of brackets 12 extends in the lengthwise direction and abuts against the circumferential side surface of the filter element 200.

Three quick-assembling assemblies 30 are provided in one-to-one correspondence to the three support portions 22. Each of the quick-assembling assemblies 30 includes a first connection member 31 and the second connection member 32. The first connection member 31 is a snap and disposed on the bracket 12. The second connector 32 is a hook and disposed on the second portion 222. The first connection member 31 is engageable with or disengageable from the second connection member 32.

In the related art, a filter element bracket has a relatively heavy design and a large coverage area for the filter element, which causes air inflow to be reduced and increases energy consumption of the whole machine. Meanwhile, the air blower has a complicated inner structure, so that the light is insufficient during the mounting of the filter element. Thus, it is difficult to ensure one-time successful mounting in the related art.

According to the present disclosure, the mounting device 100 has a lightweight and open design, which solves a shielding problem of the filter element 200, and effectively improves actual air intake effect of the filter element 200.

In the present disclosure, a snap-type design is used, which is convenient and effortless. The filter element 200 can be accurately docked even under the condition of insufficient light.

In the present disclosure, it is possible to significantly reduce the working time required for mounting the filter element 200 by a worker in the production line and allow the filter element 200 to be easily mounted and dismounted, which is suitable for after-sales maintenance.

The mounting and dismounting of the filter element 200 will be described below.
1. the mounting portion 21 is pre-assembled with the filter element 200 by means of a bolt, a nut, and a gasket;
2. the bracket 12 is fixed onto the body 11 by the bolt;
3. the pre-assembled filter element 200, the mounting seat 20, and the like are attached onto a side of the body 11, and the mounting seat 20 is placed in the three brackets 12 for initial positioning;
4. the hook and the snap are positioned by adjusting an angle of the pre-assembled filter element 200, the mounting seat 20, and the like, and the snap is closed for locking;
5. a mounting process of the mounting device 100 is completed;
6. a dismounting process of the mounting device 100 can be quickly completed based on an inversely mounting order.

An air blower according to embodiments of the present disclosure includes the mounting device 100 for the filter element 200 as described above.

According to the air blower according to the embodiments of the present disclosure, the filter element 200 can be quickly fastened onto the fixed seat 10 by means of the quick-assembling assemblies 30, thereby facilitating the mounting and dismounting of the filter element 200.

Other compositions and operations of the mounting device 100 according to the embodiments of the present disclosure are known to those of ordinary skill in the art, and details thereof will be omitted herein.

In the description of this specification, descriptions with reference to the terms "an embodiment", or "an example", etc. mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although the embodiments of the present disclosure are illustrated and described above, it can be understood by those of ordinary skill in the art that various changes, modifications, substitutions and alterations may be made to these embodiments without departing from the principles and spirit of the present disclosure. The scope of the present disclosure is defined by the claims and their equivalents.

## Claims

1. A mounting device for a filter element, the mounting device comprising:
a fixed seat;
a mounting seat comprising:
a mounting portion; and
a plurality of support portions spaced apart from each other in a circumferential direction of the mounting portion and connected to the mounting portion, wherein a mounting space is defined by the mounting portion and the plurality of support portions, and the filter element is mountable within the mounting space; and
a plurality of quick-assembling assemblies in one-to-one correspondence to the plurality of support portions, each of the plurality of the quick-assembling assemblies having one end connected to a corresponding support portion of the plurality of support portions and another end connected to the fixed seat.

2. The mounting device for the filter element according to claim 1, wherein each of the plurality of quick-assembling assemblies comprises:
a first connection member disposed on the fixed seat; and
a second connection member disposed on the corresponding support portion, the second connection member being engageable with or disengageable from the first connection member.

3. The mounting device for the filter element according to claim 2, wherein one of the first connection member and the second connection member is a hook, and the other one of the first connection member and the second connection member is a snap.

4. The mounting device for the filter element according to claim 2, wherein the fixed seat comprises:
a body; and
a plurality of brackets disposed on the body, the plurality of brackets being in one-to-one correspondence to the plurality of support portions, and each of the plurality of brackets being provided with the first connection member.

5. The mounting device for the filter element according to claim 4, wherein each of the plurality of brackets is detachably disposed on the body.

6. The mounting device for the filter element according to claim 2, wherein each of the plurality of support portions comprises:
a first portion connected to the mounting portion, the first portion and the mounting portion abutting against an axial end portion of the filter element away from the fixed seat; and
a second portion vertically connected to the first portion and abutting against a circumferential side surface of the filter element, the second connection member being disposed on the second portion.

7. The mounting device for the filter element according to claim 6, wherein the second portion extends in a lengthwise direction perpendicular to the mounting portion and the body.

8. The mounting device for the filter element according to claim 1, wherein the mounting seat further comprises a fastener disposed on the mounting portion and configured to be connected to the filter element.

9. The mounting device for the filter element according to claim 1, wherein the plurality of support portions comprises at least three support portions.

10. An air blower, comprising the mounting device for the filter element according to any one of claims 1 to 9.
